# EUROPÄISCHE PATENTSCHRIFT

(11) **EP 3 053 767 B1**
(45) Veröffentlichungstag und Bekanntmachung des Hinweises auf die Patenterteilung: **23.05.2018**
(21) Anmeldenummer: 15154197.6
(22) Anmeldetag: 06.02.2015
(51) Int. Cl.: B60J 7/10, B60J 5/06

(54) **Planenbefestigungselement und Planenverriegelungsvorrichtung für Nutzfahrzeuge**
Plan fixing element and plan fixing device for commercial vehicles
Élément de fixation de bâches et dispositif de verrouillage de bâches pour véhicules utilitaires

(43) Veröffentlichungstag der Anmeldung: 10.08.2016
(73) Patentinhaber: Fliegl, Helmut, 07819 Triptis (DE)
(72) Erfinder: Fliegl, Helmut, 07819 Triptis (DE)
(74) Vertreter: Kramer Barske Schmidtchen Patentanwälte PartG mbB

(56) Entgegenhaltungen:
- DE-A1- 3 119 363
- DE-U1- 9 206 151
- US-A- 5 320 402
- US-A- 5 758 922
- US-A1- 2009 041 557

## Beschreibung

### Technisches Gebiet

Die vorliegende Erfindung betrifft ein Planenbefestigungselement für ein Nutzfahrzeug, wie z. B. einen Lastkraftwagen oder einen Sattelanhänger, eine Planenverriegelungsvorrichtung und einen Nutzfahrzeugaufbau für ein Nutzfahrzeug, wie z. B. einen Lastkraftwagen oder einen Sattelanhänger.

### Technischer Hintergrund

Sattelanhänger können über eine Sattelkupplung mit einem Zugfahrzeug verbunden werden und weisen üblicherweise ein Rahmengestell auf, das zumindest einen Teil eines Laderaums für Transportgüter bereitstellt. Das Rahmengestell besteht zumeist aus einer ebenen Grundfläche, die die Ladefläche bildet, und mehreren vertikalen Streben, die sich von der Grundfläche nach oben erstrecken.

Eine Plane kann auf wenigstens einer Seite des Sattelanhängers oder des Nutzfahrzeugs befestigt und wie eine Gardine zwischen einer geöffneten und einer geschlossen Stellung verschiebbar sein. Die Plane ist am Dach über Schienen befestigt, die die Verschiebbarkeit der Plane ermöglichen. Beispielsweise ist die Plane aus der geschlossenen Stellung in die geöffnete Position dadurch bringbar, dass die Plane von vorne nach hinten geschoben wird und sich die Plane im hinteren Bereich zusammenschiebt. Somit kann der Sattelanhänger von der wenigstens einen Seite be- und entladen werden. Nach dem Be- bzw. Entladevorgang wird die Plane in die geschlossene Position verschoben und im Beispiel von vorne und unten am Rahmengestell befestigt, so dass sich die Plane nicht versehentlich während der Fahrt öffnen kann.

Aus der EP 2 810 803 A1 ist eine Planenverriegelungsvorrichtung bekannt, mit der die Plane am Rahmengestell befestigt werden kann.

Ferner ist aus der nachveröffentlichen EP 3 028 887 A1 ein Planenbefestigungselement zum lösbaren Befestigen einer Plane eines Nutzfahrzeugaufbaus an einem Rahmengestell bekannt. Das darin offenbarte Planenbefestigungselement weist einen Hauptkörper und einen am Hauptkörper vorhandenen Permanentmagnet auf, der dazu ausgebildet ist, an einer Planenverriegelungsvorrichtung magnetisch zu haften, wenn der Hauptkörper mit der Planenverriegelungsvorrichtung eingreift.

In der US 5 320 402 A die als nächstliegender Stand der Technik angesehen wird, ist eine Planenverriegelungsvorrichtung für einen Rahmenbereich eines Lieferwagens offenbart. Die Planenverriegelungsvorrichtung weist eine flexible Plane mit einer Öffnung auf, die Zugang in das Innere des Lieferwagens ermöglicht. Die Plane ist über eine Bewegungseinrichtung in Umfangsrichtung des Rahmenbereichs zwischen einer Ruheposition, in der Zugang durch die Öffnung in das Innere des Lieferwagens verhindert wird, und einer Betriebsstellung, in der Zugang durch die Öffnung in das Innere des Lieferwagens ermöglicht wird, bewegbar. An der Plane sind Metallstreifen angebracht, die über am Rahmenbereich angebrachte Permanentmagneten lösbar befestigt sind. Eine elektrische Spule kann aktiviert werden, um die Permanentmagneten zu entmagnetisieren und ein Bewegen der Plane zu ermöglichen.

Eine weitere Planenverriegelungsvorrichtung ist aus der US 5 758 922 A bekannt.

Ein der Erfindung zugrunde liegendes technisches Problem besteht darin, einen Nutzfahrzeugaufbau mit Plane bereitzustellen, der eine verbesserte Handhabung zulässt. Zudem sind ein verbessertes Planenbefestigungselement und eine verbesserte Planenverriegelungsvorrichtung für einen solchen Nutzfahrzeugaufbau bereitzustellen.

### Darstellung der Erfindung

Gemäß einem Aspekt der vorliegenden Erfindung ist eine Planenverriegelungsvorrichtung zum lösbaren Befestigen einer Plane eines Nutzfahrzeugaufbaus an einem Rahmengestell des Nutzfahrzeugaufbaus offenbart. Das Rahmengestell begrenzt zusammen mit der Plane einen Laderaum. Die erfindungsgemäße Planenverriegelungsvorrichtung weist wenigstens ein am Rahmengestell oder an der Plane angebrachtes Verriegelungselement auf, das dazu ausgebildet ist, mit wenigstens einem an der Plane oder am Rahmengestell nicht lösbar befestigten Planenbefestigungselement lösbar einzugreifen bzw. verbunden zu werden und die Plane am Rahmengestell zu befestigen. Die erfindungsgemäße Planenverriegelungsvorrichtung weist ferner wenigstens einen Elektrohaftmagneten auf, der wenigstens eine Spule umfasst und dazu ausgebildet ist, das wenigstens eine Planenbefestigungselement magnetisch zu halten, wenn die Planenverriegelungsvorrichtung mit dem Planenbefestigungselement eingreift bzw. verbunden ist.

Gemäß einem weiteren Aspekt der vorliegenden Erfindung ist ein Planenbefestigungselement zum lösbaren Befestigen einer Plane eines Nutzfahrzeugaufbaus an einem Rahmengestell des Nutzfahrzeugaufbaus offenbart. Der Nutzfahrzeugaufbau weist das Rahmengestell, das zusammen mit der Plane einen Laderaum begrenzt, und eine am Rahmengestell oder der Plane angebrachte Planenverriegelungsvorrichtung auf. Das erfindungsgemäße Planenbefestigungselement hat einen Hauptkörper, der einen Planenbefestigungsbereich und einen Planenverriegelungsbereich aufweist. Der Planenbefestigungsbereich ist dazu ausgebildet, den Hauptkörper mit der Plane oder dem Rahmengestell zu verbinden. Der Planenverriegelungsbereich ist dazu ausgebildet, mit der Planenverriegelungsvorrichtung lösbar einzugreifen bzw. verbunden zu werden. Das erfindungsgemäße Planenbefestigungselement weist ferner einen am Hauptkörper vorhandenen Elektrohaftmagneten auf, der eine Spule umfasst und dazu ausgebildet ist, an der Planenverriegelungsvorrichtung magnetisch zu haften, wenn der Hauptkörper mit der Planenverriegelungsvorrichtung eingreift bzw. verbunden ist.

Gemäß einem weiteren Aspekt der vorliegenden Erfindung ist ein Nutzfahrzeugaufbau offenbart, der ein Rahmengestell, wenigstens eine an einer Seite des Rahmengestells verschiebbar befestigte Plane, die zusammen mit dem Rahmengestell einen Laderaum begrenzt, eine am Rahmengestell oder an der Plane angebrachte Verriegelungsvorrichtung und wenigstens ein an der Plane oder am Rahmengestell nicht lösbar befestigtes Planenbefestigungselement aufweist. Dabei ist entweder die Planenverriegelungsvorrichtung gemäß der vorliegenden Offenbarung und/oder das wenigstens eine Planenbefestigungselement gemäß der vorliegenden Offenbarung ausgebildet.

Mit der erfindungsgemäßen Planenverriegelungsvorrichtung und dem erfindungsgemäßen Planenbefestigungselement kann durch entsprechende Steuerung des Elektrohaftmagnets sichergestellt werden, dass sich das Planenbefestigungselement vor dem Verriegeln nicht von der Planenverriegelungsvorrichtung löst. Der Elektrohaftmagnet kann entweder am Planenbefestigungselement oder an der Planenverriegelungsvorrichtung angebracht sein und wie gewünscht gesteuert werden.

Das Verriegelungselement der erfindungsgemäßen Planenverriegelungsvorrichtung kann entweder am Rahmengestell oder an der Plane befestigt sein. In einer Ausführungsform, in der das Verriegelungselement am Rahmengestell befestigt ist, ist das Planenbefestigungselement an der Plane nicht lösbar angebracht. Im Gegensatz dazu ist in einer Ausführungsform, in der das Verriegelungselement an der Plane befestigt ist, das Planenbefestigungselement am Rahmengestell nicht lösbar angebracht.

In einer erfindungsgemäßen Ausführungsform ist der Elektrohaftmagnet am Verriegelungselement der Planenverriegelungsvorrichtung oder am Hauptkörper des Planenbefestigungselements angebracht. Der Elektrohaftmagnet ist ein kompaktes Element und weist zumindest eine Spule mit einem Eisenkern auf, die als Einheit vergossen sind.

In einer weiteren erfindungsgemäßen Ausführungsform ist die Spule des Elektrohaftmagnets direkt um das Verriegelungselement oder den Hauptkörper des Planenbefestigungselements angeordnet. Beispielsweise ist die zumindest eine Spule derart angeordnet, dass sie das wenigstens eine Verriegelungselement oder den Hauptkörper des Planenbefestigungselements zumindest teilweise umgibt. In dieser Ausgestaltung wirkt das Verriegelungselement oder der Hauptkörper des Planenbefestigungselements als Kern und kann das von der stromdurchflossenen Spule erzeugte Magnetfeld zumindest teilweise verstärken.

Gemäß einer erfindungsgemäßen Ausführungsform weist der Hauptkörper des Planenbefestigungselements wenigstens eine Öffnung auf, die im Planenverriegelungsbereich angeordnet ist. Die wenigstens eine Öffnung ist dazu ausgebildet, mit dem Verriegelungselement der Planenverriegelungsvorrichtung einzugreifen. Das Verriegelungselement ist bevorzugt ein Vorsprung, beispielsweise in der Form eines Hakens oder einer Erhebung, an dem der Elektrohaftmagnet angebracht ist oder die Spule das Verriegelungselement zumindest teilweise umgibt, d. h. um das Verriegelungselement gewickelt ist. Das derart ausgestaltete Verriegelungselement kann somit mit dem an der Plane oder am Rahmengestell befestigten Planenbefestigungselement eingreifen und die Plane am Rahmengestell befestigen und spannen.

In einer beispielhaften Ausführungsform kann das Verriegelungselement am Rahmengestell, z. B. an einer am Rahmengestell bewegbar, beispielsweise drehbar oder verschiebbar, angebrachten Welle, befestigt sein und mit einem an der Plane befestigten Planenbesfestigungselement eingreifen. In einer weiteren beispielhaften Ausführungsform kann das Verriegelungselement an der Plane befestigt sein und mit einem am Rahmengestell befestigten Planenbefestigungselement eingreifen.

In einer erfindungsgemäßen Ausführungsform ist das wenigstens eine Verriegelungselement an einer drehbar oder verschiebbar am Rahmengestell gelagerten Welle angebracht. Der Elektrohaftmagnet ist an der Welle angebracht oder die Spule des Elektrohaftmagneten kann zumindest teilweise um die Welle angeordnet sein, d. h. dass die Spule zumindest teilweise um die Welle gewickelt ist.

In einer weiteren beispielhaften Ausgestaltung ist der Planenverriegelungsbereich des Planenbefestigungselements als plattenförmiges Element ausgebildet. In dieser Ausgestaltung weist die Planenverriegelungsvorrichtung eine am Rahmengestell drehbar oder verschiebbar angebrachte Welle mit zumindest einer ebenen Fläche und zumindest einer an die ebene Fläche angrenzenden Verriegelungskante auf. Der plattenförmige Planenverriegelungsbereich des Planenbefestigungselements kann mit der ebenen Fläche bei Aktivierung des Elektrohaftmagneten magnetisch verbunden werden und bei Drehung der Welle die Plane am Rahmengestell anbringen und spannen.

In einer weiteren Ausgestaltung kann die Welle oder der Planenverriegelungsbereich des Planenbefestigungselements einen Vorsprung aufweisen, der in eine Ausnehmung eingreifen kann, die am Planenverriegelungsbereich des Planenbefestigungselements oder an der Welle vorgesehen ist. Der Vorsprung kann beispielsweise durch den Elektrohaftmagneten geformt sein, der an der Welle oder am Planenbefestigungsbereich des Planenbefestigungselements befestigt ist.

In einer beispielhaften Ausführungsform ist der am Hauptkörper des Planenbefestigungselements angebrachte Elektrohaftmagnet und/oder der Hauptkörper des Planenbefestigungselements zumindest teilweise mit einer Kunststoffschicht überzogen, damit Stöße zwischen dem Planenbefestigungselement und der Planenverriegelungsvorrichtung und dem Rahmengestell gedämpft und vom Kunststoffüberzug absorbiert werden können.

Gemäß einer weiteren beispielhaften Ausgestaltung ist das Verriegelungselement eine starr am Rahmengestell angebrachte Verriegelungsleiste, die sich im Wesentlichen entlang des Nutzfahrzeugaufbaus erstreckt und dazu ausgebildet ist, mit dem wenigstens einen Planenbefestigungselement einzugreifen. Die Verriegelungsleiste ist bevorzugt ein am Rahmengestell vertikal nach unten stehender plattenförmiger Vorsprung.

In einer erfindungsgemäßen Ausführungsform weist die Planenverriegelungsvorrichtung oder das Planenbefestigungselement ferner eine Schalteinrichtung auf, die dazu ausgebildet ist, mit dem wenigstens einen Elektrohaftmagneten verbunden zu sein und in einem aktivierten Zustand dem Elektrohaftmagneten, insbesondere der Spule, Strom zuzuführen. In einem deaktivierten Zustand der Schalteinrichtung wird die Stromzufuhr an den Elektrohaftmagneten bzw. der Spule unterbrochen und somit die magnetische Wirkung des Elektrohaftmagneten deaktiviert.

In einer weiteren Ausführungsform weist die erfindungsgemäße Planenverriegelungsvorrichtung oder das erfindungsgemäße Planenbefestigungselement ferner eine Spannungsquelle, beispielsweise eine Batterie auf, die mit der Schalteinrichtung verbunden und dazu ausgebildet ist, im aktivierten Zustand der Schalteinrichtung den Elektrohaftmagnet, insbesondere die Spule, mit Strom zu versorgen.

In einer Ausgestaltung ist die Schalteinrichtung dazu ausgebildet, nach einer vorbestimmten Zeitdauer in den deaktivierten Zustand zu schalten und somit die Stromzufuhr an den Elektrohaftmagneten automatisch zu unterbrechen. Die automatische Abschaltung kann insbesondere eine Überhitzung des Elektrohaftmagneten und der Spule verhindern.

### Kurze Beschreibung der Zeichnungen

Weitere Merkmale und Aspekte der vorliegenden Erfindung werden durch die folgende Beschreibung und die beiliegenden Zeichnungen offensichtlich, in denen:
Fig. 1 eine schematische Seitenansicht eines Sattelanhängers zeigt, der ein sich in der ausgefahrenen Position befindliches Hubdach und ein erfindungsgemäßes Planenbefestigungselement und eine erfindungsgemäße Planenverriegelungsvorrichtung aufweist,
Fig. 2 eine perspektivische Unteransicht des Rahmengestells des Sattelanhängers der Fig. 1 zeigt, dass eine Ausgestaltung einer erfindungsgemäßen Planenverriegelungsvorrichtung und mehrere beispielhafte Planenbefestigungselemente aufweist, die von der Planenverriegelungsvorrichtung gelöst sind,
Fig. 3 eine Draufsicht eines erfindungsgemäßen Planenbefestigungselements darstellt,
Fig. 4 eine Draufsicht einer weiteren Ausgestaltung eines erfindungsgemäßen Planenbefestigungselements darstellt,
Fig. 5 eine perspektivische Unteransicht des Rahmengestells des Sattelanhängers der Fig. 1 zeigt, der eine weitere Ausführung einer erfindungsgemäßen Planenverriegelungsvorrichtung und eine weitere Ausgestaltung von Planenbefestigungselementen aufweist, die von der Planenverriegelungsvorrichtung gelöst sind,
Fig. 6 eine perspektivische Ansicht einer weiteren Ausführung eines erfindungsgemäßen Planenbefestigungselements zeigt,
Fig. 7 eine perspektivische Seitenansicht eines Sattelanhängers der Fig. 1 zeigt, der eine weitere erfindungsgemäße Verriegelungsvorrichtung und mehrere Planenbefestigungselemente gemäß der Fig. 6 aufweist, und
Fig. 8 eine weitere Ansicht der in der Fig. 7 gezeigten Verriegelungsvorrichtung und der Planenbefestigungselemente zeigt.

### Ausführliche Beschreibung von Ausführungsbeispielen

Im Rahmen der vorliegenden Offenbarung ist unter dem Begriff "Elektrohaftmagnet" ein Element zu verstehen, dass zumindest eine Spule aufweist, die mit einem Eisenkern vergossen ist. Dieses Element weist außerdem Stromanschlüsse auf, damit die Spule mit Strom versorgt werden kann. Die stromdurchflossene Spule kann ein magnetisches Feld erzeugen und mit einem anderen ferromagnetischen Element wechselwirken und magnetisch damit verbunden werden.

Der vorliegenden Erfindung liegt der Gedanke zu Grunde, eine Planenverriegelungsvorrichtung und ein mit der Planenverriegelungsvorrichtung in Eingriff bringbares Planenbefestigungselement bereitzustellen, die bei Aktivierung eines Elektrohaftmagneten magnetisch miteinander wechselwirken bzw. miteinander magnetisch verbunden werden können. Der Elektrohaftmagnet kann sich dabei entweder an der Planenverriegelungsvorrichtung oder am Planenbefestigungselement befinden und kann bei Bedarf aktiviert oder deaktiviert werden.

Durch das Vorsehen eines Elektrohaftmagneten kann die magnetische Verbindung zwischen der Planenverriegelungsvorrichtung und dem Planenbefestigungselement wie gewünscht gesteuert und verhindert werden, dass sich das Planenbefestigungselement von der Planenverriegelungsvorrichtung ungewollt löst, bevor die Plane mittels der Planenverriegelungsvorrichtung am Rahmengestell befestigt und gespannt wird.

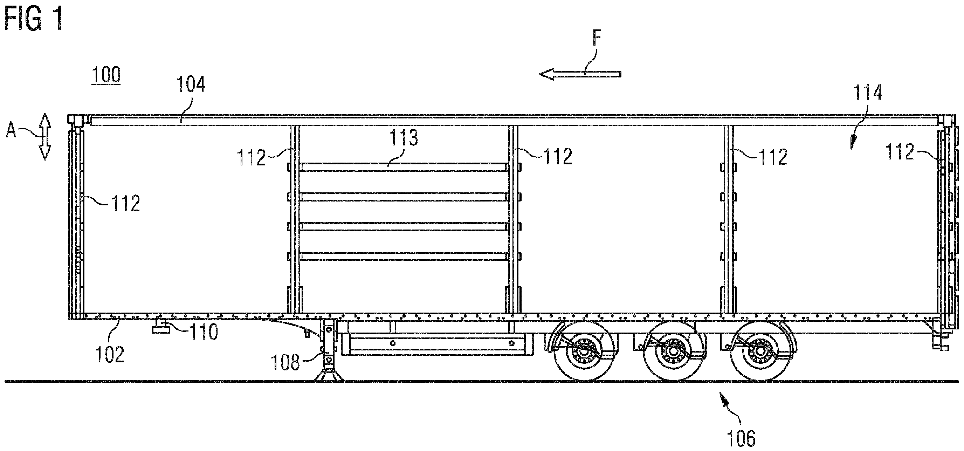

Eine beispielhafte Ausführungsform der vorliegenden Erfindung ist aus den Fig. 1 bis 8 ersichtlich. Der in der Fig. 1 gezeigte Sattelanhänger 100 umfasst ein Rahmengestell 102, ein am Rahmengestell 102 angebrachtes Fahrwerk 106, eine Stütze 108 und eine Verbindungseinrichtung 110 zum Verbinden des Sattelanhängers 100 mit einem Zugfahrzeug (nicht gezeigt). Die Verbindungseinrichtung 110 kann, wie in der Fig. 1 dargestellt, ein sogenannter Königszapfen sein, der in eine sich am Zugfahrzeug befindende Sattelkupplung eingreifen kann. Alternativ kann der Sattelanhänger 100 über eine sogenannte Zugmaulkupplung und einen Zugholm mit einem Zugfahrzeug lösbar verbunden werden.

Der in der Fig. 1 beispielhaft dargestellte Sattelanhänger 100 weist ferner ein am Rahmengestell 102 höhenverstellbar angebrachtes Hubdach 104 auf. In weiteren Ausgestaltungen kann der Sattelanhänger 100 ohne Hubdach 104 bereitgestellt sein.

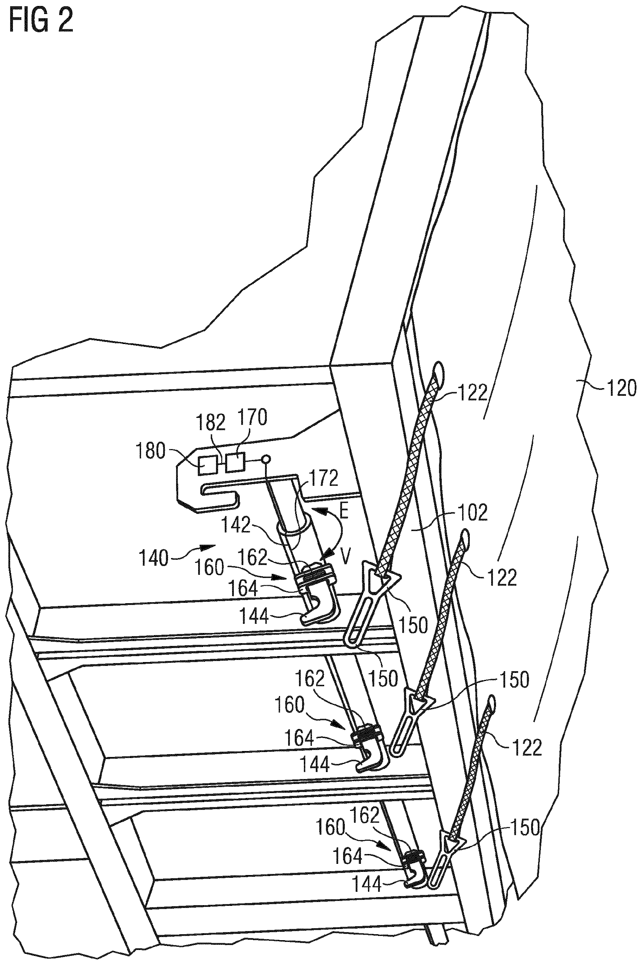

Das Rahmengestell 102 weist vertikale Streben 112 auf, die gemeinsam mit dem Hubdach 104 und einer in der Fig. 1 nicht explizit dargestellten Plane 120 (siehe Fig. 2) einen Laderaum 114 begrenzen. Zur Versteifung der vertikalen Streben 112 sind zusätzlich horizontale Streben 113 angeordnet. Die vertikalen Streben 112 sind als Teleskopstreben ausgebildet, um die Höhenverstellbarkeit des Hubdaches 104 zu gewährleisten.

Die obere Seite der Plane 120 (siehe Fig. 2) ist am Hubdach 104 derart befestig, dass die Plane 120 von vorne nach hinten parallel zu einer Längsrichtung F des Sattelanhängers 100 wie eine Gardine bewegt werden kann, um den Laderaum 114 von einer Sattelanhängerseite zugänglich zu machen. Die Beweglichkeit der Plane 120 kann mittels einem Schienensystem (in den Zeichnungen nicht explizit dargestellt) ermöglicht werden, das bevorzugt am Hubdach 104 und/oder am Rahmengestell 102 angeordnet ist. Wird die Plane 120 aus der geschlossenen Position in die geöffnete Position verschoben, können Transportgüter von der Sattelanhängerseite in den Laderaum 114 gebracht werden.

Wird ferner das Hubdach 104 in die ausgefahrene Position gebracht, ist der Laderaum 114 vergrößert und die Beladung des Laderaums 114 vereinfacht. Der Doppelpfeil A in der Fig. 1 stellt die Bewegungsrichtungen des Hubdachs 104 dar.

Um das Hubdach 104 aus der eingefahrenen Position in die ausgefahrene Position zu bewegen, kann am Sattelanhänger 100 eine Bewegungsvorrichtung (in den Zeichnungen nicht explizit dargestellt) angeordnet sein, die mechanisch, pneumatisch, hydraulisch oder elektrisch arbeitet.

Ist die Plane 120 in der geschlossenen Position, d. h. wenn die Öffnung zum Laderaum 114 verschlossen ist, so kann die Plane 120 über mehrere in der Fig. 2 beispielhaft gezeigte Planenbefestigungselemente 150 am Rahmengestell 102 mit Hilfe einer in der Fig. 2 beispielhaft gezeigten Planenverriegelungsvorrichtung 140 befestigt werden.

In der Fig. 2 ist eine Unteransicht auf das Rahmengestell 102 gezeigt, in der sich die Plane 120 zwar in der geschlossen Position befindet, aber nicht am Rahmengestell 102 befestigt ist. Wie die Fig. 2 zeigt, weist das Rahmengestell 102 die Planenverriegelungsvorrichtung 140 auf, die eine am Rahmengestell 102 drehbar gelagerte Welle 142 und wenigstens ein daran befestigtes Verriegelungselement 144 aufweist. Das Verriegelungselement 144 ist bevorzugt als Vorsprung oder, wie in der Fig. 2 gezeigt, als Haken ausgebildet und die Welle 142 ist bevorzugt über eine Betätigungsvorrichtung (in den Zeichnungen nicht explizit dargestellt) in einer Verriegelungsrichtung V und einer Entriegelungsrichtung E drehbar, so dass das wenigstens eine Verriegelungselement 144 aus einer verriegelten Stellung in eine entriegelte Stellung drehbar ist. In der Fig. 2 ist die Welle 142 in einer Stellung zwischen der vollständig verriegelten Position und der vollständig entriegelten Position gezeigt.

Die Drehung der Welle 142 kann mechanisch über die Betätigungseinrichtung gedreht werden. In weiteren Ausgestaltungen kann die Welle 142 mittels eine pneumatischen, elektrischen oder hydraulischen Stelleinheit (nicht gezeigt) gedreht werden.

Die Plane 120 weist mehrere voneinander beabstandete Gurte 122 auf, an denen jeweils ein Planenbefestigungselement 150 befestigt ist. Die Position der Gurte 122 entlang der Längsrichtung F entspricht im Wesentlichen der Position der Verriegelungselemente 144. Vorzugsweise entspricht die Anzahl der Gurte 122 und der daran angebrachten Planenbefestigungselemente 150 der Anzahl der Verriegelungselemente 144.

Die Gurte 122 erstrecken sich jeweils von der Plane 120 im Wesentlichen nach unten und bilden einen Übergang zwischen der Plane 120 und den jeweiligen Planenbefestigungselementen 150. In einer weiteren Ausgestaltung können die Gurte 122 mit den daran befestigen Planenbefestigungselementen 150 an der Welle 142 befestigt sein, wobei in dieser Ausgestaltung die Verriegelungselemente 144 an der Plane 120 vorgesehen sein können, die dann mit dem Planenbefestigungselement 150 eingreifen. Dabei kann das Planenbefestigungselement 150 alternativ als Haken ausgebildet sein, der in entsprechende Verriegelungselemente 144 in der Form von Ösen, die in der Plane 120 gebildet sind, eingreifen kann.

Soll die Plane 120 in der geschlossenen Position am Rahmengestell befestigt werden, werden zunächst sämtliche Planenbefestigungselemente 150 mit den zugeordneten Verriegelungselementen 144 in Eingriff gebracht. Die Welle 142 befindet sich dabei bevorzugt in einer Position zwischen der vollständig verriegelten und der vollständig entriegelten Position, so dass die Planenbefestigungselemente 150 beim Einhaken bzw. Eingreifen in die Verriegelungselemente 144 zumindest teilweise mechanisch gesichert sind. Im Anschluss daran wird die Welle 142 in der Verriegelungsrichtung V gedreht, so dass die Plane 120 im Wesentlichen nach unten gezogen und gestrafft wird und somit am unteren Bereich des Rahmengestells 102 befestigt ist.

In der Fig. 2 ist ferner gezeigt, dass an den Verriegelungselementen 144 jeweils Elektrohaftmagnete 160 angebracht sind, die jeweils eine Spule 162 aufweisen. Die Spulen 162 sind um die jeweiligen Verriegelungselemente 144 angeordnet. Beispielsweise sind die Spulen 126 auf einen ringförmigen Träger 164 aufgewickelt und anschließend über die Verriegelungselemente 144 gesteckt und an der Welle 142 befestigt, beispielsweise an die Welle 142 geklebt.

In weiteren Ausführungsformen kann der Elektrohaftmagnet 160 als Elektrohaftmagnet ausgebildet und beispielsweise an einer Seitenfläche der Verriegelungselemente 144 angebracht sein. Außerdem ist es möglich, dass die Spulen 162 in der Umgebung der Verriegelungselemente 144 um die Welle 142 angeordnet bzw. um die Welle 142 gewickelt sind. In einer weiteren Ausgestaltung können die Spulen 162 in die Welle 142 integriert sein.

Die Planenverriegelungsvorrichtung 140 weist ferner eine Schalteinrichtung 170 auf, die beispielsweise am Rahmengestell 102 angebracht ist. In anderen Ausführungsformen kann die Schalteinrichtung 170 auch am Zugfahrzeug (nicht gezeigt) angeordnet sein, beispielsweise im Führerhaus des Zugfahrzeugs, das den Sattelanhänger 100 zieht.

Die Schalteinrichtung 170 ist mit jeder der Spulen 162 über eine Verbindungsleitung 172, beispielsweise eine Stromleitung, verbunden. Die Verbindungsleitung 172 erstreckt sich entlang der Welle 142 und ist an dieser zumindest teilweise befestigt. In weiteren Ausgestaltungen kann die Verbindungsleitung in der Welle 142 integriert verlaufen.

Die Schalteinrichtung 170 kann ein vom Bediener des Sattelanhängers 100 betätigter Schalter sein, über den eine Stromzufuhr von der Schalteinrichtung 170 zu den Spulen 162 manuell ein- oder ausgeschaltet werden kann. In einem aktivierten Zustand der Schalteinrichtung 170 wird den Spulen 162 Strom zugeführt, wobei in einem deaktivierten Zustand der Schalteinrichtung 170 die Stromzufuhr zu den Spulen 162 unterbrochen ist.

Eine Spannungsquelle 180, beispielsweise eine Batterie, ist am Rahmengestell 102 angebracht und mit der Schalteinrichtung 170 über eine Verbindungsleitung 182, beispielweise eine Stromleitung, verbunden. Die Spannungsquelle 180 ist dazu ausgebildet, den Spulen 162 elektrischen Strom zuzuführen, wenn sich die Schalteinrichtung 170 im aktivierten Zustand befindet.

Anstatt eine Spannungsquelle 180 vorzusehen kann die Schalteinrichtung 170 in weiteren Ausgestaltungen dazu ausgebildet sein, mit dem sich am Sattelanhänger 100 befindlichen Stromnetz (nicht gezeigt) verbunden zu sein und von diesem elektrischen Strom zu empfangen. Das sich am Sattelanhänger 100 befindliche Stromnetz wird mit Strom vom Zufahrzeug gespeist.

Die Planenbefestigungselemente 150, die Verriegelungselemente 144 und/oder die Welle 142 sind aus einem ferromagnetischen Material gebildet, die mit dem Elektrohaftmagneten 160 wechselwirken können, d. h. mit dem Elektrohaftmagneten 160 magnetisch verbunden werden können. Außerdem sind die Planenbefestigungselemente 150, die Verriegelungselemente 144 und/oder die Welle 142 aus einem Material gebildet, das dafür geeignet ist, als Kern für die Spulen 162 zu wirken.

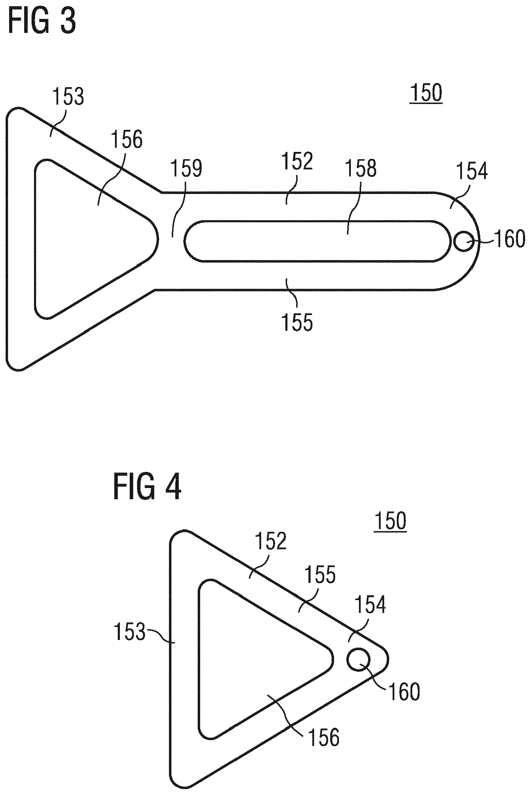

In den Fig. 3 und 4 sind beispielhaft offenbarte Planenbefestigungselemente 150 detaillierter dargestellt. Das in der Fig. 3 gezeigte Planenbefestigungselement 150 weist einen Hauptkörper 152 auf, der einen Planenbefestigungsbereich 153 und einen Planenverriegelungsbereich 154 umfasst. Der Planenbefestigungsbereich 153 ist dazu ausgebildet, den Hauptkörper 152 nicht lösbar mit einem Gurt 122 zu verbinden, der wiederum entweder an der Plane 120 oder an der Welle 142 befestigt ist. Der Planenverriegelungsbereich 154 ist dazu ausgebildet, den Hauptkörper 152 lösbar mit einem Verriegelungselement 144 zu verbinden, das wiederum entweder an der Welle 142 oder an der Plane 120 vorgesehen ist.

Bevorzugt ist der Hauptkörper 152 beispielsweise als plattenförmiger Körper. Der Planenbefestigungsbereich 153 ist mit einer ersten Öffnung 156, beispielsweise mit einer im Wesentlichen dreieckigen Form, versehen und der Planenverriegelungsbereich 154 ist mit einer zweiten Öffnung 158, beispielsweise in der Form eines Langlochs, versehen.

Die Fig. 4 zeigt eine weitere beispielhafte Ausgestaltung des Planenbefestigungselements 150, das einen Hauptkörper 152, einen Planenbefestigungsbereich 153, einen Planenverriegelungsbereich 154 und eine Öffnung 156 aufweist.

Die in den Fig. 3 und 4 beispielhaft dargestellten Planenbefestigungselemente 150 weisen ferner einen Elektrohaftmagneten 160 auf, der jeweils am Hauptkörper 152, bevorzugt am Planenverriegelungsbereich 154, angebracht ist. Der Elektrohaftmagnet 160 kann beispielsweise die Form eines zylindrischen Vorsprungs haben, der sich vom plattenförmigen Hauptkörper 152 erstreckt. In weiteren Ausgestaltungen kann die Spule des Elektrohaftmagnets 160 um den Hauptkörper 152 angeordnet bzw. gewickelt sein.

In den in den Fig. 3 und 4 dargestellten Ausführungen, in denen der Elektrohaftmagnet 160 an dem an der Plane 120 befestigten Planenbefestigungselement 150 angebracht ist, können die Verbindungsleitungen, die den Elektrohaftmagneten 160 mit der Schalteinrichtung 170 verbinden, zumindest teilweise an der Plane 120 vorgesehen sein. Beispielsweise sind die Verbindungsleitungen in die Plane 120 und/oder Gurte 122 eingenäht und verlaufen dann an einem vorderen oder hinteren Ende der Plane 120 auf das Rahmengestell 102 über und sind dann an der Schalteinrichtung 170 angeschlossen. Ferner kann können die Verbindungsleitungen in eine Stromschiene im Hubdach 104 übergehen.

Die Formen des Planenbefestigungsbereichs 153, des Planenverriegelungsbereichs 154, der ersten Öffnung 156 und der zweiten Öffnung 158 sind nicht auf die in der Fig. 3 dargestellten Formen begrenzt und können jegliche Formen aufweisen, die dazu fähig sind, die Plane 120 über die Planenverriegelungsvorrichtung 140 am Rahmengestell 102 zu befestigen. Beispielsweise kann der Hauptkörper 152 mehrere zweite Öffnungen 158 aufweisen, die mit den Verriegelungselementen 144 eingreifen können.

Die erste Öffnung 156 ist dazu ausgebildet, den Gurt 122 aufzunehmen, der entweder an der Plane 120 oder an der Welle 142 befestigt werden kann. Ferner ist die erste Öffnung 156 dazu ausgebildet, mit einem der Verriegelungselemente 144 einzugreifen, wenn sich das Hubdach 104 in der eingefahrenen Position befindet. Die zweite Öffnung 158 ist dazu ausgebildet, mit einem zugeordneten Verriegelungselement 144 einzugreifen, wenn sich das Hubdach 104 in einer wenigstens teilweise ausgefahrenen Position befindet.

In einer weiteren Ausführungsform können mehrere zweite Öffnungen 158 angeordnet sein, die in Abhängigkeit des Ausfahrbetrags des Hubdachs 104 mit einem der Verriegelungselemente 144 in Eingriff gebracht werden können.

Zum Verriegeln der Plane 120 werden die Planenbefestigungselemente 150 mit den Verriegelungselementen 144 der Planenverriegelungsvorrichtung 140 in Eingriff gebracht. Während dem in Eingriff Bringen der Planenbefestigungselemente 150 mit den jeweiligen Verriegelungselementen 144 befindet sich die Welle 142 in der vollständig entriegelten Position oder in der in der Fig. 2 gezeigten Position zwischen der vollständig verriegelten und der vollständig entriegelten Position. Dadurch werden die Planenbefestigungselemente 150 bereits teilweise mechanisch mit dem jeweiligen Verriegelungselement 144 in Eingriff gehalten.

Dadurch, dass entweder die erfindungsgemäße Planenverriegelungsvorrichtung 140 mehrere Elektrohaftmagnete 160 oder jedes erfindungsgemäße Planenbefestigungselement 150 mindestens einen Elektrohaftmagneten 160 aufweist, können die Planenbefestigungselemente 150 mit der Verriegelungsvorrichtung 140 zusätzlich magnetisch verbunden und mit diesen in Eingriff gehalten werden, sogar wenn sich die Welle 142 in der vollständig entriegelten Stellung befindet. Sind die jeweiligen Öffnungen der Planenbefestigungselemente 150 mit den Verriegelungselementen 144 in Eingriff gebracht, kann die Welle 122 mittel der Betätigungsvorrichtung in Verriegelungsrichtung V gedreht wird. Dadurch werden sämtliche Verriegelungselemente 144 ebenfalls in der Verriegelungsrichtung V gedreht, so dass die Gurte 122 die Plane 120 in vertikaler Richtung straffen und die Plane 120 somit am Rahmengestell 102 befestigen und spannen.

Die magnetische Verbindung zwischen den Planenbefestigungselementen 150 und den Verriegelungselementen 144 verhindert ein vorzeitiges und unbeabsichtigtes Lösen der beiden Elemente voneinander, bevor die Welle 142 in Verriegelungsrichtung V gedreht wird.

Wird die Welle 142 über die Betätigungsvorrichtung in der Entriegelungsrichtung E gedreht, können alle Verriegelungselemente 144 gleichzeitig gedreht werden. In der entriegelten Stellung der Welle 142 sind die Verriegelungselemente 144 relativ zu den Planenbefestigungselementen 150 derart ausgerichtet, dass sich die Planenbefestigungselemente 150 in vertikaler Richtung frei lösen können. Bei Deaktivierung der Elektrohaftmagneten 160 können sich die Planenbefestigungselemente 150 bei Drehung der Welle 142 in die vollständig entriegelte Position von den Verriegelungselementen 144 durch Einwirkung der Gewichtskraft lösen. Daraufhin kann die Plane 120 wieder horizontal wie eine Gardine zum Öffnen des Laderaums 114 bewegt werden.

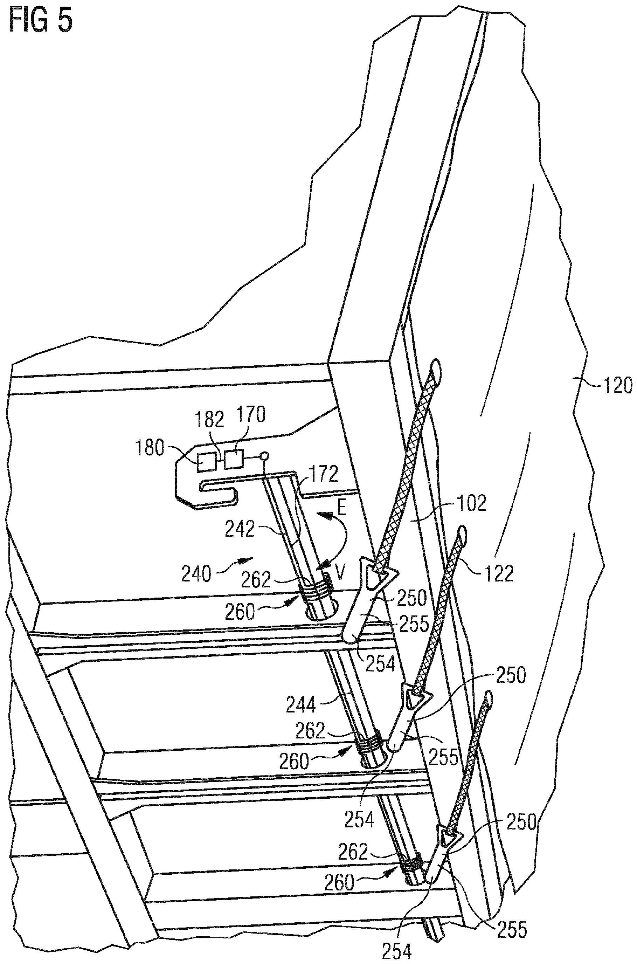

In der Fig. 5 ist eine weitere beispielhafte Ausführungsform eines erfindungsgemäßen Planenbefestigungselements 250 und eine weitere beispielhafte Ausgestaltung einer erfindungsgemäßen Planenverriegelungsvorrichtung 240 dargestellt. Wie in der Fig. 5 gezeigt, weist die Verriegelungsvorrichtung 240 eine drehbar am Rahmengestell 102 angebrachte Welle 242 auf. Die in der Fig. 5 dargestellte Welle 242 hat ein dreieckiges Querschnittsprofil mit zumindest einer Verriegelungskante 244. In weiteren Ausführungsformen kann die Welle 242 jegliches Querschnittsprofil aufweisen, das mit wenigstens einer Verriegelungskante 244 versehen ist, beispielsweise ein Vierkantprofil oder ein Profil mit mehreren Kanten.

Das in der Fig. 5 dargestellte Planenbefestigungselement 250 ist im Wesentlichen wie das Planenbefestigungselement 150 der Fig. 3 ausgebildet, weist jedoch keine zweite Öffnung 158 auf. Somit ist der Hauptkörper jedes Planenbefestigungselements 250 über die erste Öffnung am jeweiligen Gurt 122 befestigt.

An der Welle 242 sind mehrere Elektrohaftmagneten 260 vorgesehen, dessen Spulen 262 um die Welle 242 herum angeordnet sind. In einer weiteren Ausgestaltung können die Spulen 262 in die Welle 242 integriert sein. Bevorzugt ist die Welle 242 in Längsrichtung betrachtet an denjenigen Stellen mit einem Elektrohaftmagneten 260 versehen, die in unmittelbarer Nähe zu einer Befestigungsposition eines Planenbefestigungselement 250 mit der Welle 242 angeordnet sind.

Die Elektrohaftmagneten 260 sind, wie bereits in der Fig. 2 gezeigt, mit der Schalteinrichtung 170 über die Verbindungsleitung 172 verbunden. Die Schalteinrichtung 170 ist wiederum mit der Spannungsquelle 180 über die Verbindungsleitung 182 oder mit dem Stromnetz des Sattelanhängers 100 oder des Zugfahrzeugs verbunden.

Die Verriegelungsvorrichtung 240 der Fig. 5 funktioniert derart, dass zunächst sämtliche Planenbefestigungselemente 250, genauer gesagt die plattenförmigen Planenverriegelungsbereiche 254 der Planenbefestigungselemente 250, mit einer an die Verriegelungskante 244 angrenzenden Seitenfläche der Welle 242 in Kontakt gebracht werden, während die Elektrohaftmagneten 260 aktiviert sind. Durch die stromdurchflossenen Spulen 262 und der als Kern wirkenden Welle 242 wird ein Magnetfeld erzeugt und die Planenbefestigungselemente 250 werden mit der an die Verriegelungskante 244 angrenzenden Seitenfläche der Welle 242 magnetisch verbunden. Daraufhin kann die W elle 242 in Verriegelungsrichtung V gedreht werden, wodurch die Planenbefestigungselemente 250 mittels der Verriegelungskante 244 in Verriegelungsrichtung V mitgedreht werden und die Plane 120 über die Gurte 122 gespannt wird.

In dieser Ausgestaltung ist es notwendig, dass die Elektrohaftmagneten 260 in Zuständen, in denen die Plane 120 am Rahmengestell befestigt sein soll, kontinuierlich mit Strom versorgt werden.

Anstelle des Anbringens der Elektrohaftmagneten 260 an der Welle 242 können in einer weiteren Ausgestaltung die Planenbefestigungselemente 250 mit einem Elektrohaftmagneten versehen sein. Wie bereits in den Fig. 3 und 4 gezeigt, können die Elektrohaftmagneten am Planenverriegelungsbereich 254 des Planenbefestigungselements 250 angebracht sein. Vorzugsweise befinden sich der Form der Elektrohaftmagneten entsprechende Ausnehmungen an der Welle 242, in die die Elektrohaftmagneten eingreifen können. Somit kann neben der magnetischen Verbindung zwischen dem Planenbefestigungselement 250 und der Welle 242 auch eine formschlüssige Verbindung bereitgestellt werden. Außerdem können in anderen Ausgestaltungen die Spulen der Elektrohaftmagneten den Planenverriegelungsbereich 254 des Planenbefestigungselements 250 umgeben bzw. umwickeln.

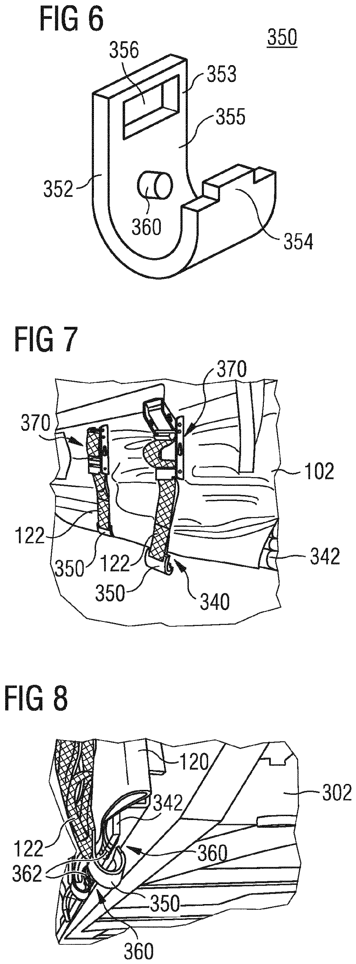

Unter Verweis auf die Fig. 6 bis 8 ist eine weitere beispielhafte Ausführungsform eines Planenbefestigungselements 350 und einer Planenverriegelungsvorrichtung 340 gezeigt. Die Planenbefestigungselemente 350 sind, wie in den bisher dargestellten Ausführungsformen dargestellt, nicht lösbar mit Gurten 122 verbunden, die an der Plane 120 angebracht sind. Die Planenbefestigungselemente 350 weisen einen Hauptkörper 352 mit einem Planenbefestigungsbereich 353 auf, der mit einer Öffnung 356 versehen ist, über die der Hauptkörper 352 am Gurt 122 nicht lösbar befestigt werden kann.

Der Hauptkörper 352 weist ferner einen Planenverriegelungsbereich 354 in bogenförmiger Gestalt auf, so dass der Planenverriegelungsbereich 354 die Gestalt eines Hakens hat. Der Planenverriegelungsbereich 354 ist bevorzugt U-förmig und dazu ausgebildet, mit einer am Rahmengestell 102 angeordneten Planenverriegelungsleiste 342 (siehe Fig. 7 und 8) einzugreifen.

Wie in der Fig. 6 gezeigt, ist am Hauptköper 352 ein Elektrohaftmagnet 360 angebracht. Der Elektrohaftmagnet 360 kann an jeder geeigneten Position am Hauptkörper 352 angeordnet werden. In weiteren Ausgestaltungen kann die Spule des Elektrohaftmagnets 360 den Hauptkörper 352 umgeben bzw. umwickeln.

In der Fig. 7 ist das linke Planenbefestigungselement 350 in einem verriegelten Zustand dargestellt, wobei das rechte Planenbefestigungselement 350 der Fig. 7 in einem entriegelten Zustand gezeigt ist. In der Fig. 7 ist ferner dargestellt, dass die Planenbefestigungselemente 350 mit den Gurten 122 jeweils über bekannte Hebelvorrichtungen 370 an der Plane 120 befestigt sind. Die Hebelvorrichtungen 370 weisen einen Hebel auf, der dazu ausgebildet ist, den Gurt 122 zu spannen und so die Plane 120 zu straffen und die Planenbefestigungselemente 350 mit der Planenverriegelungsleiste 342 zu verspannen. In der Fig. 7 ist der linke Hebel in der verriegelten Position, während der rechte Hebel in der entriegelten Position ist.

Die Planenverriegelungsvorrichtung 340 weist die Planenverriegelungsleiste 342 auf, die sich im Wesentlichen entlang des Rahmengestells 102 erstreckt. Die Planenverriegelungsleiste 342 ist bevorzugt ein vertikal nach unten stehender Vorsprung, der mit dem U-förmigen Planenverriegelungsbereich 354 eingreifen kann.

Anstatt die Planenbefestigungselemente 350 mit einem Elektrohaftmagneten 360 zu versehen, können in einer weiteren beispielhaften Ausführungsform mehrere Elektrohaftmagnete 360 an der Planenverriegelungsleiste 342 vorhanden sein, die die jeweiligen Planenbefestigungselemente 350 bei entsprechenden Aktivierung magnetisch halten können. Hierzu können, wie in der Fig. 8 gezeigt, die Spulen 362 der Elektrohaftmagnete 360 um die Planenverriegelungsleiste 342 angeordnet sein. In weiteren Ausführungsformen können die Elektromagnete 360 an der Planenverriegelungsleiste 342 angebracht sind.

Wie bereits mit Bezug auf die Fig. 5 beschrieben, können die Planenbefestigungselemente 350 eine der Form der Elektrohaftmagnete entsprechende Ausnehmung aufweisen, in die die Elektrohaftmagnete beim Eingreifen in die Planenverriegelungsleiste 342 zumindest teilweise eingesetzt werden können, damit neben der magnetischen Verbindung eine zumindest teilweise formschlüssige Verbindung zwischen dem Planenbefestigungselement 350 und der Planenverriegelungsleiste 342 vorgesehen ist.

Um die Plane 120 am Rahmengestell 102 zu befestigen, werden sämtliche Planenbefestigungselemente 350 nacheinander wie folgt mit der Planenverriegelungsvorrichtung 340 in Eingriff gebracht. Zunächst werden die Elektrohaftmagnete 360 durch Betätigen der Schalteinrichtung (in der Fig. 8 nicht explizit dargestellt) aktiviert und das Planenbefestigungselement 350 mit der Planenverriegelungsleiste 342 in Eingriff gebracht, so dass der U-förmige Planenbefestigungsbereich 354 die Planenverriegelungsleiste 342 zumindest teilweise umgreift. Durch die magnetische Wechselwirkung bzw. Verbindung zwischen dem Planenbefestigungselement 350 und der Planenverriegelungsleiste 342 wird das Planenbefestigungselement 350 im eingegriffenen Zustand an der Planenverriegelungsleiste 342 gehalten.

Im nächsten Schritt wird der Hebel der Hebelvorrichtung 370 umgeklappt (in der Fig. 7 nach unten), so dass der Gurt 122 eine vertikal nach oben gerichtete Kraft auf das Planenbefestigungselement 350 aufbringt und so die Plane 120 spannt. Nach dem Umklappen aller Hebel können die Elektrohaftmagneten 360 wieder deaktiviert werden.

Zum Lösen der Plane 120 werden alle Hebel der Hebelvorrichtungen 370 wieder nach oben geklappt, so dass sich die einzelnen Planenbefestigungselemente 350 unter den Einfluss der Gewichtskraft von der Planenverriegelungsleiste 342 lösen.

In weiteren Ausführungen kann auf dem Hubdach 104 des Sattelanhängers 100 eine Photovoltaikanlage angebracht sein, die die Elektrohaftmagneten 160, 260, 360 über die Schalteinrichtung 170 mit Strom versorgen kann.

In weiteren Ausgestaltungen kann die Schalteinrichtung 170 einen Sensor, beispielsweise ein Tastsensor, Winkelsensor oder Drehratensensor, aufweisen, der dazu ausgebildet ist, die aktuelle Stellung der Welle 142 zu erfassen. Erfasst beispielsweise der Sensor, dass sich die Welle 142 aus der verriegelten Stellung in die entriegelte Stellung dreht, kann der Sensor der Schalteinrichtung 170 ein Signal bereitstellen, das der Schalteinrichtung 170 anzeigt, den Elektrohaftmagneten 160 Strom zuzuführen, damit die Plane 120 am Rahmengestell 102 befestigt werden kann. Somit kann die Aktivierung und Deaktivierung der Elektrohaftmagneten 160 automatisch erfolgen.

Die Schalteinrichtung 170 ist in bevorzugten Ausgestaltungen dazu ausgebildet, die Stromzufuhr an die Elektrohaftmagneten 160, 260, 360 automatisch zu unterbrechen, wenn eine vorbestimmte Zeitdauer seit der Aktivierung der Elektrohaftmagneten 160, 260, 360 überschritten wird. Die vorbestimmte Zeitdauer kann beispielweise im Bereich von ungefähr 10 s bis ungefähr 10 min liegen. Das automatische Deaktivieren der Elektrohaftmagneten 160, 260, 360 kann verhindern, dass die Elektrohaftmagneten 160, 260, 360 übermäßig erhitzt werden, wodurch Schäden an den Elektrohaftmagneten 160, 260, 360 verhindert werden können.

Die Elektrohaftmagneten 160, 260, 360 werden beispielsweise mit einer elektrischen Spannung beaufschlagt, die in einem Bereich von ungefähr 0,1 V bis ungefähr 230 V liegt. Außerdem können in beispielhaften Ausführungsformen die Widerstände der Spulen 162, 262, 362 in einem Bereich von ungefähr 5 Ohm bis ungefähr 200 Ohm liegen. Der Strom, der den Elektrohaftmagneten 160, 260, 360 zugeführt wird, kann Gleichstrom oder Wechselstrom sein.

Es sei ausdrücklich erwähnt, dass jede der vorbeschriebenen Ausgestaltungen des Elektrohaftmagnets 160, 260, 360 entweder an der Planenverriegelungsvorrichtung 140, 240, 340 oder an dem Planenbefestigungselement 150, 250, 350 vorgesehen sein kann. Dabei kann der Elektrohaftmagnet 160, 260, 360 beispielsweise als Elektrohaftmagnet mit Spule, die um das jeweilige Element angeordnet ist, ausgestaltet sein.

## Patentansprüche

1. Planenverriegelungsvorrichtung (140; 240; 340) zum lösbaren Befestigen einer Plane (120) eines Nutzfahrzeugaufbaus an einem Rahmengestell (102) des Nutzfahrzeugaufbaus, wobei das Rahmengestell (102) zusammen mit der Plane (120) einen Laderaum (114) begrenzt, wobei die Planenverriegelungsvorrichtung (140; 240; 340) aufweist:
- wenigstens ein am Rahmengestell (102) oder an der Plane (120) angebrachtes Verriegelungselement (144; 242; 342), das dazu ausgebildet ist, mit wenigstens einem an der Plane (120) oder am Rahmengestell (102) nicht lösbar befestigten Planenbefestigungselement (150; 250; 350) lösbar verbunden zu werden und die Plane (120) am Rahmengestell (102) zu befestigen, **gekennzeichnet durch**
- wenigstens einen Elektrohaftmagnet (160; 260; 360), der wenigstens eine Spule (162; 262; 362) aufweist und dazu ausgebildet ist, das wenigstens eine Planenbefestigungselement (150; 250; 350) magnetisch zu halten, wenn die Planenverriegelungsvorrichtung (140; 240; 340) mit dem Planenbefestigungselement (150; 250; 350) verbunden ist.

2. Planenverriegelungsvorrichtung (140; 240; 340) nach Anspruch 1, wobei der wenigstens eine Elektrohaftmagnet (160; 260; 360) an dem wenigstens einen Verriegelungselement (144; 242; 342) angebracht ist.

3. Planenverriegelungsvorrichtung (140; 240; 340) nach einem der vorhergehenden Ansprüche, ferner mit einer Schalteinrichtung (170), die dazu ausgebildet ist, mit dem wenigstens einen Elektrohaftmagneten(160; 260; 360) verbunden zu sein und in einem aktivierten Zustand dem Elektrohaftmagneten (160; 260; 360) Strom zu zuführen.

4. Planenverriegelungsvorrichtung (140; 240; 340) nach Anspruch 3, ferner mit einer Spannungsquelle (180), die mit der Schalteinrichtung (170) verbunden und dazu ausgebildet ist, im aktivierten Zustand der Schalteinrichtung (170) den Elektrohaftmagnet (160; 260; 360) mit Strom zu versorgen.

5. Planenverriegelungsvorrichtung (140) nach einem der vorhergehenden Ansprüche, wobei das wenigstens eine Verriegelungselement ein Verriegelungshaken (144) ist und die Spule (162; 262; 362) des Elektrohaftmagnets (160; 260; 360) zumindest teilweise um den Verriegelungshaken (144) herum angeordnet ist.

6. Planenverriegelungsvorrichtung (140) nach einem der vorhergehenden Ansprüche, ferner mit einer am Rahmengestell (102) drehbar gelagerten Welle (142; 242), an der das wenigstens eine Verriegelungselement (144; 244) angebracht ist, wobei die Spule (162; 262; 362) des Elektrohaftmagnets (160; 260; 360) zumindest teilweise um die Welle (142) herum angeordnet ist oder in die Welle (142; 242) zumindest teilweise integriert ist.

7. Planenverriegelungsvorrichtung (340) nach einem der Ansprüche 1 bis 4, wobei das wenigstens eine Verriegelungselement eine starr am Rahmengestell (102) angebrachte Verriegelungsleiste (342) ist, die sich im Wesentlichen entlang des Nutzfahrzeugaufbaus erstreckt und dazu ausgebildet ist, mit dem wenigstens einen Planenbefestigungselement (150; 250; 350) einzugreifen.

8. Planenverriegelungsvorrichtung (240) nach einem der Ansprüche 1 bis 4, wobei das Verriegelungselement eine am Rahmengestell (102) bewegbar gelagerte Welle (242) ist, die einen Querschnitt mit wenigstens einer Verriegelungskante (244) aufweist, wobei die Spule (162; 262; 362) des Elektrohaftmagnets (160; 260; 360) zumindest teilweise um die Welle (242) herum angeordnet ist.

9. Planenbefestigungselement (150; 250; 350) zum lösbaren Befestigen einer Plane (120) eines Nutzfahrzeugaufbaus an einem Rahmengestell (102) des Nutzfahrzeugaufbaus, wobei der Nutzfahrzeugaufbau das Rahmengestell (102), das zusammen mit der Plane (120) einen Laderaum (114) begrenzt, und eine am Rahmengestell (102) oder an der Plane (120) angebrachte Planenverriegelungsvorrichtung (140; 240; 340) umfasst, wobei das Planenbefestigungselement (150; 250; 350) aufweist:
- einen Hauptkörper (152; 352), der einen Planenbefestigungsbereich (153; 353), der dazu ausgebildet ist, den Hauptkörper (152; 352) mit der Plane (120) oder dem Rahmengestell (102) nicht lösbar zu verbinden, und einen Planenverriegelungsbereich (154; 254; 354) aufweist, der dazu ausgebildet ist, mit der Planenverriegelungsvorrichtung (140; 240; 340) lösbar verbunden zu werden, **gekennzeichnet durch**
- einen am Hauptkörper (152; 352) vorhandenen Elektrohaftmagneten (160; 260; 360), der wenigstens eine Spule (162; 262; 362) umfasst und dazu ausgebildet ist, an der Planenverriegelungsvorrichtung (140; 240; 340) magnetisch zu haften, wenn der Hauptkörper (152; 352) mit der Planenverriegelungsvorrichtung (140; 240; 340) verbunden ist.

10. Planenbefestigungselement (150; 250; 350) nach Anspruch 9, wobei der Elektrohaftmagnet (160; 260; 360) am Planenverriegelungsbereich (154; 254; 354) angebracht ist.

11. Planenbefestigungselement (250) nach Anspruch 9 oder 10, wobei der Planenverriegelungsbereich (254) ein am Hauptkörper (352) gebildetes plattenförmiges Element ist, das dazu ausgebildet ist, mit der Planenverriegelungsvorrichtung (240) lösbar verbunden zu werden.

12. Planenbefestigungselement (150; 250; 350) nach einem der Ansprüche 9 bis 11, wobei der Elektrohaftmagnet (160; 260; 360) und/oder der Hauptkörper (152; 352) wenigstens teilweise mit Kunststoff überzogen sind.

13. Nutzfahrzeugaufbau, umfassend:
- ein Rahmengestell (102),
- wenigstens eine an einer Seite des Rahmengestells (102) verschiebbar befestigte Plane (120), die zusammen mit dem Rahmengestell (102) einen Laderaum (114) begrenzt,
- eine am Rahmengestell (102) oder an der Plane (120) angebrachte Verriegelungsvorrichtung (140; 240; 340), und
- wenigstens ein an der Plane (120) oder am Rahmengestell (102) nicht lösbar befestigtes Planenbefestigungselement (150; 250; 350),
wobei entweder die Planenverriegelungsvorrichtung (140; 240; 340) nach einem der Ansprüche 1 bis 8 ausgebildet ist und/oder das wenigstens eine Planenbefestigungselement (150; 250; 350) nach einem der Ansprüche 9 bis 12 ausgebildet ist.

## Claims

1. A tarpaulin fixing device (140; 240; 340) adapted to detachably fix a tarpaulin (120) of a commercial vehicle body to a chassis frame (102) of the commercial vehicle body, wherein the chassis frame (102) and the tarpaulin (120) define a cargo space (114), the tarpaulin fixing device (140; 240; 340) comprising:
- at least one locking element (144; 242; 242), which is attached to the chassis frame (102) or the tarpaulin (120) and adapted to be detachably fixed to at least one tarpaulin fastening element (150; 250; 350), which fastening element is fixedly attached to the tarpaulin (120) or to the chassis frame (102), and to fix the tarpaulin (120) to the chassis frame (102), **characterized by**
- at least one electro holding magnet (160; 260; 360) having at least one coil (162; 262; 362) and adapted to hold the at least one tarpaulin fastening element (150; 250; 350) by means of magnetic force if the tarpaulin fixing device (140; 240; 340) is connected with the tarpaulin fastening element (150; 250; 350).

2. The tarpaulin fixing device (140; 240; 340) according to claim 1, wherein the at least one electro holding magnet (160; 260; 360) is fixed to the at least one locking element (144; 242; 342).

3. The tarpaulin fixing device (140; 240; 340) according to one of the preceding claims, further comprising a switching device (170) adapted to be connected with the at least one electro holding magnet (160; 260; 360) and to supply power to the electro holding magnet (160; 260; 360) in an actuated state.

4. The tarpaulin fixing device (140; 240; 340) according to claim 3, further comprising a voltage source (180) connected with the switching device (170) and adapted to supply power to the electro holding magnet (160; 260; 360) in the actuated state of the switching device.

5. The tarpaulin fixing device (140) according to one of the preceding claims,
wherein the at least one locking element is a locking hook (144), and the coil (162; 262; 362) of the electro holding magnet (160; 260; 360) is at least partially arranged around the locking hook (144).

6. The tarpaulin fixing device (140) according to one of the preceding claims, further comprising a shaft (142; 242) rotatably supported on the chassis frame (102), on which shaft the at least one locking element (144; 244) is fixed, wherein the coil (162; 262; 362) of the electro holding magnet (160; 260; 360) is at least partially arranged around the shaft (142), or at least partially integrated into the shaft (142; 242).

7. The fixing device (340) according to one of claims 1 to 4, wherein the at least one locking element is a locking bar (342) which is fixedly attached to the chassis frame (102), extends substantially along the commercial vehicle body, and is adapted to engage with the at least one tarpaulin fastening element (150; 250; 350).

8. The tarpaulin fixing device (240) according to one of claims 1 to 4, wherein the locking element is a shaft (242) rotatably supported on the chassis frame (102) and having a cross-section with at least one locking edge (244), the coil (162; 262; 362) of the electro holding magnet (160; 260; 360) being at least partially arranged around the shaft (242).

9. A tarpaulin fastening element (150; 250; 350) for detachably fastening a tarpaulin (120) of a commercial vehicle body to a chassis frame (102) of the commercial vehicle body, wherein the commercial vehicle body comprises the chassis frame (102) which, together with the tarpaulin (120), defines a cargo space (114), and a tarpaulin fixing device (140; 240; 340), which is fixed to the chassis frame (102) or to the tarpaulin (120), the tarpaulin fastening element (150; 250; 350) comprising
- a main body (152; 352) comprising a tarpaulin fastening portion (153; 353), which is adapted to fixedly connect the main body (152; 352) with the tarpaulin (120) or the chassis frame (102), and a tarpaulin fixing portion (154; 254; 354), which is adapted to be detachably connected with the tarpaulin fixing device (140; 240; 340),
**characterized by**
- an electro holding magnet (160; 260; 360) provided on the main body (152; 352), wherein the electro holding magnet comprises at least one coil (162; 262; 362) and is adapted to magnetically adhere to the tarpaulin fixing device (140; 240; 340) when the main body (152; 352) is connected to the tarpaulin fixing device (140; 240; 340).

10. The tarpaulin fastening element (150; 250; 350) according to claim 9, wherein the electro holding magnet (160; 260; 360) is attached to the tarpaulin fixing portion (154; 254; 354).

11. The tarpaulin fastening element (250) according to claim 9 or 10, wherein the tarpaulin fixing portion (254) is a plate-like element formed on the main body (352) and adapted to be detachably fixed to the tarpaulin fixing device (240).

12. The tarpaulin fastening element (150; 250; 350) according to one of claims 9 to 11, wherein the electro holding magnet (160; 260; 360) and/or the main body (152; 352) is/are at least partially coated by a synthetic material.

13. A commercial vehicle body, comprising
- a chassis frame (102),
- at least one tarpaulin (120) movably attached to a side of the chassis frame (102) and defining a cargo space (114) together with the chassis frame (102),
- a fixing device (140; 240; 340) attached to the chassis frame (102) or the tarpaulin (120), and
- at least one tarpaulin fastening element (150; 250; 350) fixedly attached to the tarpaulin (120) or the chassis frame (102),
wherein either the tarpaulin fixing device (140; 240; 340) is formed according to one of claims 1 to 8 and/or the at least one tarpaulin fastening element (150; 250; 350) is formed according to one of claims 9 to 12.

## Revendications

1. Dispositif de verrouillage de bâches (140 ; 240; 340) pour fixer de manière amovible une bâche (120) d'une structure de véhicule utilitaire sur un châssis (102) d'une structure de véhicule utilitaire, dans lequel le châssis (102) délimite conjointement avec la bâche (120) un espace de rangement (114), dans lequel le dispositif de verrouillage de bâches (140 ; 240 ; 340) présente :
- au moins un élément de verrouillage (144 ; 242 ; 342) monté sur le châssis (102) ou sur la bâche (120), qui est réalisé pour être relié de manière amovible à au moins un élément de fixation de bâches (150 ; 250 ; 350) fixé de manière non amovible à la bâche (120) ou au châssis (102) et pour fixer la bâche (120) au châssis (102), **caractérisé par**
- au moins une ventouse électromagnétique (160 ; 260 ; 360), qui présente au moins une bobine (162 ; 262 ; 362) et est réalisée pour retenir magnétiquement au moins un élément de fixation de bâches (150; 250 ; 350), lorsque le dispositif de verrouillage de bâches (140 ; 240 ; 340) est relié à l'élément de fixation de bâches (150 ; 250 ; 350).

2. Dispositif de verrouillage de bâches (140 ; 240 ; 340) selon la revendication 1, dans lequel l'au moins une ventouse électromagnétique (160 ; 260 ; 360) est montée sur l'au moins un élément de verrouillage (144 ; 242 ; 342).

3. Dispositif de verrouillage de bâches (140 ; 240 ; 340) selon l'une quelconque des revendications précédentes, en outre avec un dispositif de commutation (170), qui est réalisé pour être relié à l'au moins une ventouse électromagnétique (160 ; 260 ; 360) et pour amener du courant à la ventouse électromagnétique (160 ; 260 ; 360) dans un état activé.

4. Dispositif de verrouillage de bâches (140 ; 240 ; 340) selon la revendication 3, en outre avec une source de tension (180), qui est reliée au dispositif de commutation (170) et est réalisée pour alimenter en courant la ventouse électromagnétique (160 ; 260 ; 360) dans l'état activé du dispositif de commutation (170).

5. Dispositif de verrouillage de bâches (140) selon l'une quelconque des revendications précédentes, dans lequel l'au moins un élément de verrouillage est un crochet de verrouillage (144) et la bobine (162 ; 262 ; 362) de la ventouse électromagnétique (160 ; 260 ; 360) est agencée au moins en partie autour du crochet de verrouillage (144).

6. Dispositif de verrouillage de bâches (140) selon l'une quelconque des revendications précédentes, en outre avec un arbre (142 ; 242) logé de manière rotative sur le châssis (102), sur lequel l'au moins un élément de verrouillage (144 ; 244) est monté, dans lequel la bobine (162 ; 262 ; 362) de la ventouse électromagnétique (160 ; 260 ; 360) est agencée au moins en partie autour de l'arbre (142) ou est intégrée au moins en partie dans l'arbre (142 ; 242).

7. Dispositif de verrouillage de bâches (340) selon l'une quelconque des revendications 1 à 4, dans lequel l'au moins un élément de verrouillage est une barrette de verrouillage (342) montée de manière rigide sur le châssis (102), qui s'étend sensiblement le long de la structure de véhicule utilitaire et est réalisée pour entrer en prise avec l'au moins un élément de fixation de bâches (150 ; 250 ; 350).

8. Dispositif de verrouillage de bâches (240) selon l'une quelconque des revendications 1 à 4, dans lequel l'élément de verrouillage est un arbre (142) logé de manière mobile sur le châssis (102), qui présente une section transversale avec au moins une arête de verrouillage (244), dans lequel la bobine (162 ; 262 ; 362) de la ventouse électromagnétique (160 ; 260 ; 360) est agencée au moins en partie autour de l'arbre (242).

9. Élément de fixation de bâches (150 ; 250 ; 350) pour fixer de manière amovible une bâche (120) d'une structure de véhicule utilitaire sur un châssis (102) d'une structure de véhicule utilitaire, dans lequel la structure de véhicule utilitaire comprend le châssis (102), qui délimite conjointement avec la bâche (120) un espace de rangement (114), et un dispositif de verrouillage de bâches (140 ; 240 ; 340) monté sur le châssis (102) ou sur la bâche (120), dans lequel l'élément de fixation de bâches (150 ; 250 ; 350) présente :
- un corps principal (152 ; 352), qui présente une zone de fixation de bâches (153 ; 353), qui est réalisée pour relier de manière non amovible le corps principal (152 ; 352) à la bâche (120) ou au châssis (102), et une zone de verrouillage de bâches (154 ; 254 ; 354) qui est réalisée pour être reliée de manière amovible au dispositif de verrouillage de bâches (140 ; 240 ; 340), **caractérisé par**
- une ventouse électromagnétique (160 ; 260 ; 360) présente sur le corps principal (152 ; 352), qui comprend au moins une bobine (162 ; 262 ; 362) et est réalisée pour adhérer magnétiquement au dispositif de verrouillage de bâches (140 ; 240 ; 340), lorsque le corps principal (152 ; 352) est relié au dispositif de verrouillage de bâches (140 ; 240 ; 340).

10. Élément de fixation de bâches (150 ; 250 ; 350) selon la revendication 9, dans lequel la ventouse électromagnétique (160 ; 260 ; 360) est montée sur la zone de verrouillage de bâches (154 ; 254 ; 354).

11. Élément de fixation de bâches (250) selon la revendication 9 ou 10, dans lequel la zone de verrouillage de bâches (254) est un élément en forme de plaque formé sur le corps principal (352), qui est réalisé pour être relié de manière amovible au dispositif de verrouillage de bâches (240).

12. Élément de fixation de bâches (150 ; 250 ; 350) selon l'une quelconque des revendications 9 à 11, dans lequel la ventouse électromagnétique (160 ; 260 ; 360) et/ou le corps principal (152 ; 352) sont revêtus au moins en partie de plastique.

13. Structure de véhicule utilitaire, comprenant :
- un châssis (102),
- au moins une bâche (120) fixée de manière déplaçable à un côté du châssis (102), qui délimite conjointement avec le châssis (102) un espace de rangement (114),
- un dispositif de verrouillage de bâches (140 ; 240 ; 340) monté sur le châssis (102) ou sur la bâche (120), et
- au moins un élément de fixation de bâches (150 ; 250 ; 350) fixé de manière non amovible à la bâche (120) ou au châssis (102),
dans laquelle soit le dispositif de verrouillage de bâches (140 ; 240 ; 340) est réalisé selon l'une quelconque des revendications 1 à 8 et/soit l'au moins un élément de fixation de bâches (150 ; 250; 350) est réalisé selon l'une quelconque des revendications 9 à 12.
